# EUROPEAN PATENT SPECIFICATION

(11) **EP 2 534 641 B1**
(45) Date of publication and mention of the grant of the patent: **28.11.2018**
(21) Application number: 11711388.6
(22) Date of filing: 10.02.2011
(51) Int. Cl.: G06T 7/00

(54) **METHOD FOR OBTAINING A THREE-DIMENSIONAL RECONSTRUCTION FROM ONE OR MORE PROJECTIVE VIEWS AND USE THEREOF**
VERFAHREN ZUR ERSTELLUNG EINER DREDIMENSIONALEN REKONSTRUKTION AUS EINER ODER MEHREREN PROJEKTIONSANSICHTEN UND VERWENDUNG DAFÜR
PROCÉDÉ D'OBTENTION D'UNE RECONSTRUCTION TRIDIMENSIONNELLE À PARTIR D'UN OU DE PLUSIEURS SENS DE PROJECTION ET SON PROCÉDÉ D'UTILISATION

(30) Priority: 12.02.2010 ES 201000192
(43) Date of publication of application: 19.12.2012
(73) Proprietor: Universitat Pompeu-Fabra, 08002 Barcelona (ES); Cetir Centre Medic, S.A., 08029 Barcelona (ES)
(72) Inventor: HUMBERT, Ludovic, E-08002 Barcelona (ES); WHITMARSH, Tristan, E-08002 Barcelona (ES); DEL RIO BARQUERO, Luis, E-08029 Barcelona (ES); DE CRAENE, Mathieu, E-08002 Barcelona (ES); FRANGI CAREGNATO, Alejandro, Federico, E-08002 Barcelona (ES)
(74) Representative: Torner Lasalle, Elisabet
(86) International application number: PCT/IB2011/000235
(87) International publication number: WO 2011/098895

(56) References cited:
- WO-A1-2008/146069
- WO-A1-2009/106816
- US-A- 5 871 018
- US-A1- 2002 038 118
- US-A1- 2006 002 630
- US-A2- 2007 185 498
- TRISTAN WHITMARSH, LUDOVIC HUMBERT, MATHIEU DE CRAENE, LUIS M. DEL RIO BARQUERO, ALEJANDRO F. FRANGI: "Número de Comunicación: 113:Reconstruccion de la forma del femur y densidad mineral osea en 3D para el diagnostico de osteoporosis a partir de DXA", Poster Session Online SOCIEDAD ESPAÑOLA DE INVESTIGACIÓN ÓSEA Y DEL METABOLISMO MINERALXIV Congreso SEIOMM, 27 October 2009 (2009-10-27), 30 October 2009 (2009-10-30), XP002658658, Santander Retrieved from the Internet: URL:http://www.postersessiononline.es/aula _comunicacion.asp?congreso=38662135&buscar =si&grupo=todos&tipo=autor [retrieved on 2011-09-09]
- SEISE M ET AL: "Parts-based segmentation with overlapping part models using Markov chain Monte Carlo", IMAGE AND VISION COMPUTING, vol. 27, no. 5, 2 April 2009 (2009-04-02), pages 504-513, XP026077873, ELSEVIER, GUILDFORD, GB ISSN: 0262-8856, DOI: 10.1016/J.IMAVIS.2008.04.020 [retrieved on 2008-05-10]
- STAN Z LI: "Recognizing Multiple Overlapping Objects in Image: An Optimal Formulation", IEEE TRANSACTIONS ON IMAGE PROCESSING, vol. 9, no. 2, 1 February 2000 (2000-02-01), XP011025521, IEEE SERVICE CENTER, PISCATAWAY, NJ, US ISSN: 1057-7149
- MARDIA K V ET AL: "DEFORMABLE TEMPLATE RECOGNITION OF MULTIPLE OCCLUDED OBJECTS", IEEE TRANSACTIONS ON PATTERN ANALYSIS AND MACHINE INTELLIGENCE, vol. 19, no. 9, 1 September 1997 (1997-09-01), pages 1035-1042, XP000724674, IEEE SERVICE CENTER, LOS ALAMITOS, CA, US ISSN: 0162-8828, DOI: 10.1109/34.615452

## Description

### Field of the Art

The present invention relates, in a first aspect, to a method for obtaining a three-dimensional reconstruction from one or more projective views, and more particularly to a method which comprises obtaining a three-dimensional reconstruction of the shape and appearance of two or more objects, as well as information concerning relative spatial relationships between different poses of said objects.

A second aspect of the invention relates to a use of the three-dimensional reconstruction obtained by means of the method proposed by the first aspect for diagnosis.

### Prior Art

Projective views (such as radiographic projective views obtained by means of X-rays, or DXA (Dual-energy X Ray) images, or by means of fluoroscopy techniques) are typically used in routine clinical procedures for diagnosing various pathologies (scoliosis, osteoporosis, etc.), and they are associated with low doses of radiation and a low financial cost, in addition to being readily available in clinics. However, such views or images only provide two-dimensional information about the anatomical structure of interest. A three-dimensional representation of the anatomical structure and the quantification thereof is required for a more precise diagnosis.

This three-dimensional analysis can be obtained by means of volumetric imaging devices (CT scan, MRI). Volumetric images can provide detailed three-dimensional information about anatomical structures to be analyzed. However, these imaging devices are associated with high doses of radiation for the patient, a high financial cost and generally unavailable for routine diagnoses of many pathologies (follow-up for scoliosis, osteoporosis, etc.).

To overcome the limitations of both methods (diagnosis from projective views or from volumetric imaging devices), subject-specific, i.e., personalized, three-dimensional modeling methods using one or more projective views are known.

Methods are known which, in order to obtain a three-dimensional reconstruction of an object or structure for a particular subject from projective views, use information known *a priori*, generally from other subjects, about the three-dimensional structure to be reconstructed.

The general idea of all these methods is to use a three-dimensional (generic or statistical) model of the anatomical structure incorporating information of the shape, and in some cases also information from inside the anatomical structure (bone density, tissue properties, etc.), typically referred to as information of appearance. These models can incorporate this information for one or more anatomical structures.

The use of a 3D/2D registration method for obtaining a three-dimensional reconstruction from projective views is known for the purpose of manually and/or automatically adjusting the three-dimensional model for maximizing the similarity between simulated radiographic projections generated from the three-dimensional model and the true projective views, i.e. those obtained from the anatomical structure of the patient to be reconstructed.

The mentioned methods can be grouped in this field into several categories, depending on the type of information known *a priori* which is included in the three-dimensional model, and of the type of reconstruction that can be carried out. The different three-dimensional models known in the prior art are described below.

### Generic models

These models represent the shape of an anatomical structure and are constructed from a sample or set of samples of an anatomical structure. These models were used for achieving a three-dimensional reconstruction of the shape of vertebrae from two projective views (Mitulescu, Skalli et al. 2002; Le Bras, Mitton et al. 2003; Kolta, Le Bras et al. 2005). However, these models do not incorporate any statistical information about anatomical variations in terms of shape and, consequently, are difficult to use in an automatic reconstruction process.

### Statistical shape models

To overcome the mentioned limitation associated with generic models, shape atlases have been proposed (Cootes, Taylor et al. 1995). These models incorporate statistical variations in terms of shape from a database of the anatomical structure of interest (bone, organ, etc.). These methods were used for obtaining three-dimensional reconstructions of shapes (Fleute and Lavallée 1999; Fleute, Lavallée et al. 2000; Feilkas and Zheng 2007) by means of the semiautomatic search of the model parameters which maximized the similarity between the simulated radiographic projections generated from the model and the true projective views. Nevertheless, by means of incorporating only information about shape in the model, the simulated radiographic projections are not realistic and it is difficult to assure correspondence between the simulated radiographic projections and the true views.

Patent application EP1952303 discloses a proposal using one of said statistical shape models for analyzing a part of interest of the body of a patient in order to assess bone strength and/or the risk of a future fracture by means of a method which comprises obtaining information known *a priori* of the part of interest, performing X-ray absorptiometry scans of the patient's part of interest and collecting the X-ray absorptiometry data from the scans, constructing a three-dimensional model of the patient's body part of interest by utilizing the *a priori* information along with the X-ray absorptiometry data and performing measurements of various geometric parameters on the three-dimensional model for determining geometric and structural properties.

In EP1952303, the information known *a priori* used for constructing the three-dimensional model relates to an anatomical atlas comprising information of the shape of an organ or anatomical part, either in the form of a commercially available atlas or generated from a statistical database which includes anatomical information of the shape of a plurality of patients.

Said application proposes performing 3D/2D registration on the three-dimensional model from the true projective views obtained by means of the X-ray absorptiometry scans.

Said application does not indicate that the three-dimensional model is constructed for more than one object, or that the statistical data of said three-dimensional model refer to data that are not about the shape, i.e., the construction or use of a three-dimensional statistical appearance model, and therefore a three-dimensional reconstruction personalized using the same, is not described.

### Statistical shape models along with information about the structure inside the shape

In order to improve statistical shape models, models based on shape atlases which also incorporated information about the structure inside the object were proposed (Yao and Taylor 2003; Lamecker, Wenckebach et al. 2006; Wilson 2008). These models incorporate generic information about the structure inside the shape and therefore allow the generation of more realistic radiographic projections. However, these models do not incorporate the statistical variation on the structure inside the shape. Therefore, despite being able to obtain a subject-specific reconstruction of the shape from projective views, the reconstruction of the structure inside the shape continues to be general, i.e., not subject-specific.

### Statistical shape and appearance models

For the purpose of overcoming the mentioned limitation inherent to the previously mentioned model, three-dimensional shape and appearance models have been proposed (Cootes, Edwards et al. 2001) which incorporate information about statistical variations in terms of shape and also in terms of internal structure of the shape (bone density, tissue properties, etc.), i.e., of appearance. A realistic radiographic projection and, more importantly, a three-dimensional subject-specific reconstruction of both the shape and the internal structure of an anatomical structure can be generated from this class of models using a 3D/2D registration technique, which will be described below. This method was disclosed by the group to which the present inventors belong at the "XIV Congreso SEIOMM (Spanish Society for Bone and Mineral Research)" in October 2009 in Santander (Whitmarsh, Humbert et al. 2009), and it relates only to single object models.

### 3D/2D registration methods

Concerning the aforementioned 3D/2D registration technique, different methods are known which have been widely used for performing three-dimensional reconstruction from one or more radiographic views. Some of said methods are known as intensity-based registration methods (Yao and Taylor 2003; Whitmarsh, Humbert et al. 2009), and their purpose is to find the optimal instance of a model which maximizes the similarity between the true projection and a simulated projection generated from the model. The optimal instance of the model is therefore found by searching for the parameters which describe the model (parameters of shape and appearance, for example, along with the pose and scale of the model).

The models herein mentioned are all single object models, i.e., made for a single object, such as a bone for example, which makes them unsuitable for determined applications, such as the one described in the following paragraphs.

By means of using projective views, it is necessary to deal with the problem of the structures overlap. For example, front X-rays images of the hip show overlap between several bones (pelvis and femur), soft tissues and organs. By means of using a statistical shape and appearance model of only the femur, it is impossible to obtain a subject-specific reconstruction of the femur head due to the overlap of the pelvis.

Therefore, it would be desirable for the shape and appearance models to contain information about more than one object, particularly about all the structures which can be observed in the projective views, in order to allow reproducing the same information existing in the true projective views in the simulated radiographic projections generated from the three-dimensional model.

These multi-object shape and appearance models would allow performing a three-dimensional subject-specific reconstruction for both the shape and the internal structure of all the anatomical structures of interest of the projective view or views.

Various methods aimed at dealing with multi-object modeling have been proposed and three of them are described below.

### Statistical shape models and statistical articulated models

Articulated models allow the definition of the relative movement (pose) that can be observed between two models. Statistical articulated models are constructed from information of a database of the structure of interest to capture the variation mode in terms of pose that can be observed between the different objects. Therefore, by using it along with the shape atlases, the three-dimensional model incorporates shape and pose variation modes for all the objects (Boisvert, Cheriet et al. 2008). Models of this class have been used for the three-dimensional reconstruction of the shape of vertebrae from projective views (Boisvert, Cheriet et al. 2008), using landmarks manually digitalized by an operator in the radiographies. The purpose of the 3D/2D registration method applied in this case is to search for the optimal parameters which maximize the matching between the landmarks and the three-dimensional model. However, these methods are limited to the three-dimensional reconstruction of the shape.

### Shape models and inference methods

The combination of shape models with inference methods offers an approach similar to the one provided by articulated models. In this approach, shape models are described by a set of geometric parameters and a set of pose parameters. Statistical relationships between geometric and pose parameters are defined using a database. This proposal has been used for obtaining a three-dimensional reconstruction of the spine from radiographic projections, using a manual adjustment performed by an operator (Skalli, Humbert et al. 2008; Humbert, De Guise et al. 2009).

While articulated models are formed from independent statistical shapes linked together by statistical relationships of pose, in the case of inference methods, both the shape and the pose of all the objects are linked together by statistical relationships. However, as occurs with articulated models, these methods are limited to the shape of objects.

### Multi-object shape and appearance models

These multi-object models can be also constructed similarly to the shape and single object appearance models. The idea is to deal with all the shapes and all the structures inside the shapes, i.e., the appearances, as a single set, and to perform the same statistical analysis for acquiring all the shape and appearance variation modes at once. This model has been created (Babalola, Cootes et al. 2008) and used for brain structure segmentation from volumetric images obtained by MRI (Magnetic Resonance Imaging). However, models of this class have never been used for carrying out a three-dimensional reconstruction from projective views.

### Other prior art references:

Seise M. et al. 2009 is directed to segmentation of overlapping objects in a 2D image, and it does not disclose a 2D/3D registration process nor the use of information about the relative spatial poses of the objects (which would be necessary for carrying out a registration process).
Seise M. et al. 2009 does not either disclose how to reconstruct or evaluate the internal structure, i.e. "appearance" as understood in the present invention, of the objects at all. In fact it does not even mention that internal structure.
It is to be noted that the term appearance used throughout Seise M. et al. 2009 does not refer to the internal structure of the objects but rather to their visual appearance.
The density mentioned in Seise M. et al. 2009 actually refers to the pixel density images rather than to the bone mineral density. As a matter of fact, Seise M. et al. 2009 does not mention at all either bone mineral density or internal structure.
Stan Z. Li 2000 is also directed to separating multiple objects under occlusion. However, much in the same way than Seise M. et al. 2009, the separation and identification of the objects is not sufficient to carry out a 2D/3D registration process because of the lack of a relative spatial poses model in the document. Also, Stan Z. Li 2000 does not disclose either a statistical model because it is directed to recognition of different objects rather than to reconstructing a 3D model and thus its teaching cannot be applied to a 2D/3D registration process.
Moreover, Stan Z. Li 2000 does not mention or disclose the reconstruction of the internal structure of the objects.
Mardia K. V. et al. 1997 is directed to object recognition within the context of robotic harvesting wherein the goal is the recognition of the objects in an image. While the teaching of Mardia K. V. et al. 1997 indeed takes into account pose of the objects to recognize, it does not take into account spatial relationship between objects.
Moreover, it is explicitly stated in the document that the method disclosed in Mardia K. V. et al. 1997 only works in cases the occluded regions are not visible, and would not work on a X-Rav image of bones.
Furthermore, Mardia K. V. et al. 1997 does not mention or disclose the reconstruction of the internal structure of the objects.

In summary, statistical models and 3D/2D registration methods are known for obtaining a three-dimensional reconstruction from projective views for a single object, but only one method has been proposed (by the present inventors in the "XIV Congreso SEIOMM", Whitmarsh, Humbert et al. 2009) for obtaining a three-dimensional reconstruction of the shape and appearance using statistical models which include the variation modes of both the shape and the appearance.

In the context of the multi-objects study, the three-dimensional reconstruction that can be obtained from projective views is limited to models which incorporate statistical relationships referring to the shape and relative pose of the objects, and are therefore limited to the three-dimensional reconstruction of the shape.

Multi-object modeling of the shape and appearance exists, but it is only used for volumetric imaging segmentation and not for performing a three-dimensional reconstruction from projective views.

It is therefore necessary to offer an alternative to the prior art which covers the gaps existing therein and offers a solution to the objective technical problem considered of how to provide a method for the three-dimensional reconstruction of the shape and appearance of more than one object, overlapping at least partially, from the registration of projective views in a three-dimensional statistical model which includes the variation modes of both the shape and appearance for two or more objects.

### Description of the invention

The present invention offers a solution to the objective technical problem indicated, by means of providing, in a first aspect, a method for obtaining a three-dimensional reconstruction from one or more projective views, comprising carrying out a 3D/2D registration process for adjusting at least one three-dimensional statistical model comprising statistical information of the shape and appearance of an object in order to maximize the similarity between one or more simulated projections generated from said three-dimensional statistical model, and one or more true projective views.

Unlike the known proposals, particularly the one disclosed in the 14th SEIOMM Conference by Whitmarsh, Humbert et al. 2009, the method proposed by the first aspect of the invention characteristically comprises obtaining a three-dimensional reconstruction of the shape and appearance of two or more objects, which overlap at least partially in said projective views, for the portions of said at least two objects overlapping in said projective views, by carrying out said 3D/2D registration process for at least one three-dimensional multi-object statistical model comprising statistical information of the shape and appearance for said objects, and information about relative spatial relationships between different poses of said objects.

For a preferred embodiment said projective views are radiographic views, such as DXA views or those obtained by means of fluoroscopy.

According to the embodiment, said information about relative spatial relationships is of a statistical and/or generic nature (i.e., not statistical), and also optionally includes information about scale.

For one embodiment, the method comprises obtaining three-dimensional reconstruction which also includes the relative spatial relationships between the poses of the reconstructed objects.

Although the method is not limited to a particular type of object, for a preferred embodiment the objects are anatomical structures such as bones, soft tissues and/or organs of a patient, or portions of at least one anatomical structure.

For another embodiment the objects are mechanical parts or structures.

Information about appearance must be understood as the information existing inside the object, no matter what technique is used to obtain it, in the form of, for example, distribution of bone densities if the object is a bone, or of intensities.

According to an embodiment, the method is applied to two or more objects articulated to each other, in which case the method comprises using a statistical articulated model for providing said information about relative spatial relationships.

For another alternative embodiment, the method is applied to two or more objects which are not articulated to each other, in which case the method comprises using another class of known statistical pose models for obtaining the information about relative spatial relationships between the objects.

For an embodiment, the method comprises constructing the three-dimensional multi-object statistical model used for three-dimensional reconstruction, although for other less preferred embodiments, the use of previously constructed three-dimensional multi-object models is also contemplated.

As indicated in the prior art section above, for the case in which two objects overlap it is impossible to obtain a personalized or subject-specific shape and appearance reconstruction from a statistical shape and single object appearance model, particularly of the overlapping area. This is because the distribution of densities or intensities in said object changes abruptly in the overlapping area, so when registering the projective view or views in the three-dimensional single object model, the reconstruction obtained is not very realistic due to the existence of very different density or intensity distribution values in the object itself.

In contrast, by means of using the method proposed by the first aspect of the invention it is possible to obtain this realistic three-dimensional personalized shape and appearance reconstruction, including the overlapping area. This is done as a result of adjusting a three-dimensional multi-object model, maximizing the similarity between the simulated and true views of the two objects which overlap, including the similarity of their respective distributions of densities or intensities, so by finding the simulated view or views most similar to the true views for both objects in terms of shape and appearance, the reconstruction thereof already incorporates the information of the shape and appearance of the area in which both objects overlap.

For another embodiment, that is complementary to the previous one, the method is applied to two or more objects which do not overlap in the projective views.

In relation to the 3D/2D registration process, it is carried out at least in part automatically according to one embodiment.

For one embodiment, the method comprises including statistical anatomical structure information from patients with pathologies in the three-dimensional multi-object statistical model, and carrying out the three-dimensional reconstruction relating to the shape of at least one bone and of its appearance, or internal distribution, for a determined patient, said three-dimensional reconstruction including information which allows identifying bone pathologies and/or performing an estimation of the risk of bone fracture for said patient.

A second aspect of the invention concerns a use of a three-dimensional reconstruction relating to the shape and appearance of at least two objects, and obtained according to the method proposed by the first aspect of the invention, for diagnosis in general, and particularly for diagnosis of pathologies, when the objects are anatomical structures.

According to an embodiment of said use, the latter is provided for identifying bone pathologies and/or performing an estimation of the risk of bone fracture, for said patient, when the three-dimensional multi-object statistical model includes statistical anatomical structure information from patients with pathologies, and said three-dimensional reconstruction is carried out relating to the shape of at least one bone and the appearance, or internal distribution, thereof of a determined patient.

According to another embodiment of said use, the latter comprises constructing a model for simulating a potential fracture situation of at least one of said objects, and providing an estimation of the risk of fracture thereof.

When obtaining a three-dimensional reconstruction of not only a structure but also of several structures of interest by means of the method proposed by the first aspect of the invention, a better diagnosis of various pathologies is afforded. For example, only the BMD (Bone Mineral Density) area is currently taken as a measurement to be taken into consideration for assessing the risk of hip fracture, whereas it is not the only factor which determines the strength of a femur. It is essential to take into consideration the geometry of the femur, of the hip joint, including the pelvis, and also the geometry of the hip surrounding soft tissues. It is known that the thicker the soft tissues the lower the risk of fracture of the femur.

Therefore, for another embodiment of the use proposed by the second aspect of the invention, when the objects are at least part of a femur, of a pelvis, of a hip joint, and of the hip surrounding soft tissue, of a patient, said simulations are relative to the fall of said patient and the use comprises also using said simulations for providing an estimation of the risk of hip fracture.

### Brief Description of the Drawings

The foregoing and other advantages and features will be better understood from the following detailed description of several embodiments with reference to the attached drawings which must be interpreted in an illustrative and non-limiting manner, in which:
Figure 1 is a schematic diagram illustrating the main actions carried out by means of the method proposed by the first aspect of the invention, for one embodiment;
Figure 2 also schematically shows the content of a three-dimensional multi-object model for one embodiment associated with a 3D/2D registration process;
Figure 3 schematically shows the content of a three-dimensional multi-object model for another embodiment with some differences with respect to the one illustrated in Figure 2, also associated with a 3D/2D registration process; and
Figure 4 shows two partially overlapping objects, particularly two bones, in a true projective radiographic view and in the corresponding three-dimensional reconstruction thereof.

### Detailed Description of several Embodiments

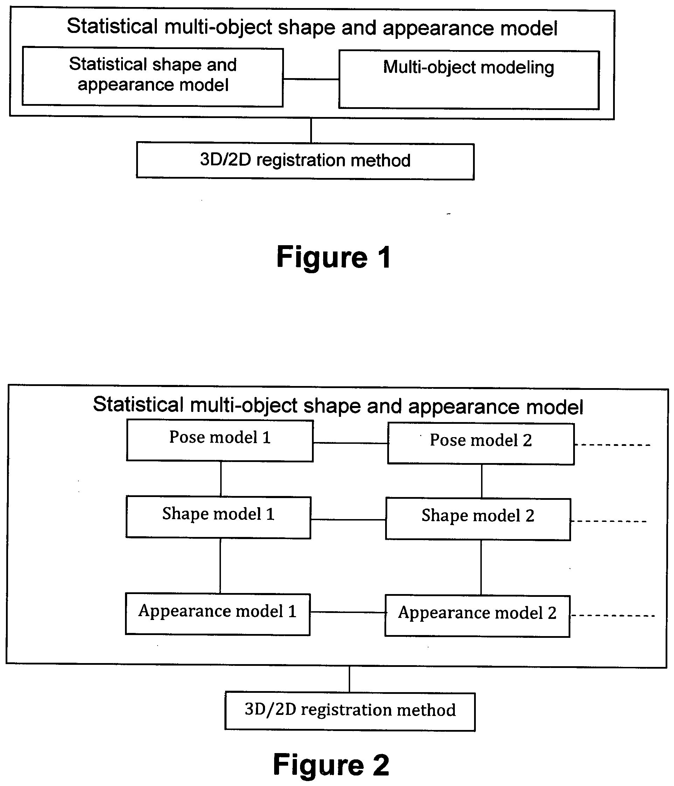

Figure 1 shows blocks containing the different elements used by the method proposed by the first aspect of the invention. First, going from top to bottom, the statistical multi-object model created and/or used by the proposed reconstruction method, which is formed by a plurality of statistical shape and single object appearance models, one per object, which are associated by means of multi-object modeling, is shown, a 3D/2D registration method as described in a previous section finally being applied on said multi-object model.

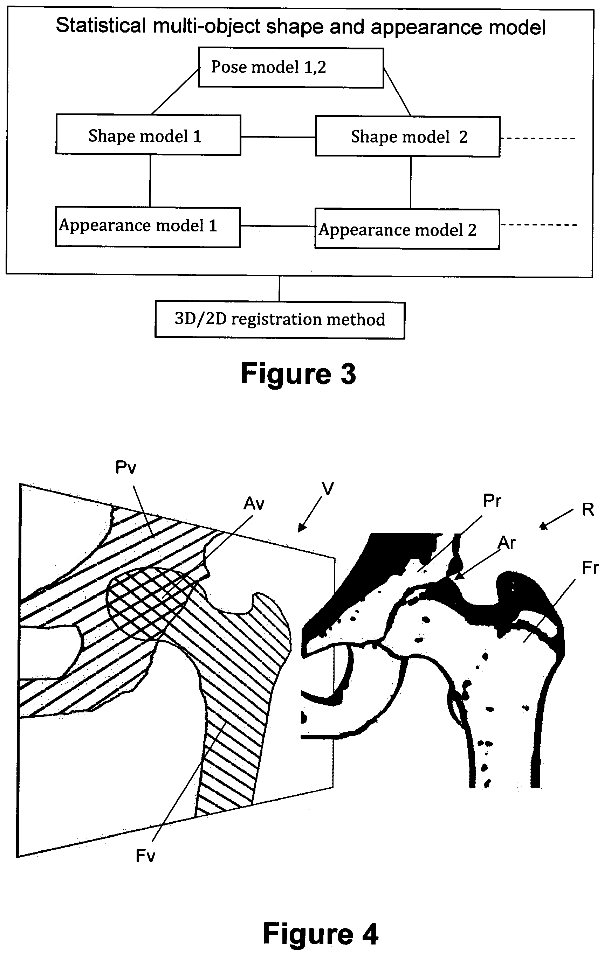

Figures 2 and 3 show respective embodiments of statistical multi-object shape and appearance models constructed according to the method proposed by the present invention, the common features of which are that in both cases the method comprises grouping the statistical information about shape and appearance into two statistical single object models, one for the shape and the other for the appearance, for each object, and including them in the three-dimensional multi-object statistical model.

In this case, only the method applied to two objects has been shown, so Figures 2 and 3 include two respective shape models, indicated as Shape model 1 and Shape model 2, and two respective appearance models, indicated as Appearance model 1 and Appearance model 2.

For constructing the statistical multi-object shape and appearance model of Figure 2, the method comprises grouping information about the poses of each of the objects in respective statistical single object pose models, particularly in those indicated as Pose model 1 and Pose model 2, in this case the method comprising obtaining the mentioned information about relative spatial relationships from the poses included in said pose models 1 and 2.

Unlike the case shown in Figure 2, in the embodiment shown in Figure 3 the method comprises grouping information about the poses of the objects, in this case two, in a single statistical single object pose model, indicated as Pose model 1,2, and including said statistical single object pose model in the three-dimensional multi-object statistical model, the information about relative spatial relationships being obtained in this case from the information included in the Pose model 1,2 by means of the method proposed by the first aspect of the invention.

Although for one embodiment that is not shown, the shape and appearance models of each object are independent with respect to those of the other object or objects, for other embodiments this is not the case and the method comprises including in the three-dimensional multi-object statistical model relationships between the single object shape model of a first of said objects and the single object shape model of a second of said objects and/or relationships between the single object appearance model of said first object and the single object appearance model of said second object.

This is the case of the embodiment shown in Figures 2 and 3, in which the shape and appearance models are related to one another, said relationships having been indicated schematically by means of respective solid joining lines between single object models.

These relationships between single object models can be of any nature, for example of a generic nature (for example, forcing the scale of Shape model 1 to be the same as that of Shape model 2) and/or a statistical nature, i.e., established from a database.

The statistical relationships can be established, for example, using inference methods (as explained in (Skalli, Humbert et al. 2008)) or using a principal components analysis (like that used in (Babalola, Cootes et al. 2008)).

Once the statistical multi-object model has been constructed from a suitable database, the method comprises controlling the performance of the model by means of using a series of parameters which allow controlling the shape, appearance and pose of the objects. These parameters can affect more than one aspect (a parameter can control, for example, the shape of Shape model 1 and the shape of Shape model 2, or the pose of Pose model 1 and the pose of Pose model 2, for the case of Figure 2, assuring that a series of articulation obligations or restrictions between these two models are complied with). The 3D/2D registration process will allow optimizing the parameters of the models in order to maximize the similarity between the simulated projections generated and the true projective views.

Finally, Figure 4 shows a projective radiographic view V showing part of a femur Fv, part of the pelvis Pv to which it is articulated in the area which is observed overlapping in the radiography V, indicated as Av, as it is the hip joint of both bones. The different dash lines in said Figure 4 indicate the appearance information existing inside each object, particularly the BMD distribution of each of them which, in the overlapping area Av, is very different from that of the portions of the bones not overlapping.

The view adjacent to the radiography V schematically represents the three-dimensional reconstruction R of the objects included in the radiography V, i.e., the femur Fr, pelvis Pr and hip joint Ar, obtained when applying the reconstruction method proposed by the first aspect of the invention on the three-dimensional multi-object statistical model constructed.

It can be seen that this reconstruction R incorporates information of the shape and appearance of the area Ar where both bones overlap, despite the changes in the BMD distribution occurring in said area, as a result of the reasons explained in the above section of description of the invention, i.e., for maximizing the similarity between the actual view V and the simulated view for the two bones which overlap.

The manner of carrying out the construction of the multi-object model and the 3D/2D registration process thereof for achieving the reconstruction R of Figure 4, which has been obtained for a single radiography V or DXA image, as well as for other reconstructions which are not shown, obtained from several radiographies taken from different angles in order to assess the impact thereof on the precision achieved in the three-dimensional reconstruction obtained, is indicated below in further detail.

### Construction of the three-dimensional statistical shape and appearance multi-object model

This model has been constructed incorporating both the statistical variations in terms of shape and the three-dimensional BMD distribution, i.e., information of the appearance. The multi-object model created for obtaining the reconstruction R schematically shown in Figure 4 has included the femur and a part of the pelvis, including the part which overlaps in the femur head, i.e., the one forming the hip joint. The multi-object model created follows the principles of shape and appearance models (Cootes, Edwards et al. 2001) and has been constructed automatically from a database of quantitative computerized tomography (QCT) scans, developing the method described by Frangi et al. (Frangi, Rueckert et al. 2002).

The model requires a QCT scanner image acquisition database, which images have been obtained using a computerized tomography (CT) scanner, along with a density ghost for relating Hounsfield units to BMD values.

A QCT reference volume has first been chosen out of all the acquisitions for the construction of the model. The bone shape of the femur and that of the part of interest of the pelvis of this scanned reference image has been segmented to generate an image in which the overlapping portion of both bones in an area of the image mixing the surfaces of the two bones is observed.

Then the remaining volumetric images are registered with respect to this reference volume by means of a deformation transform. For each volume, or volumetric image, the transformation is applied to the part of the image which mixes the surfaces of both bones (the femur and the pelvis) of the reference volume, which results in a mixed bone surface image of the femur and pelvis for each subject.

Then, two statistical shape models have been constructed from the vertexes of the parts of the image where the bone surfaces are mixed, using a principal components analysis.

Subsequently, in order to acquire only the BMD variations without taking into account the shape variations, the images acquired as a product of the described segmentations are used for deforming each volumetric image towards the same mean reference shape, using a deformation based on the Thin Plate Spline deformation (Bookstein 1989).

This task is repeated twice: once for the pelvis and once for the femur. A statistical analysis is then performed by applying it to the bone density values resulting from two BMD distribution models (appearance models), one for each of the bones.

For obliging or forcing the relative pose between the two models, an articulated model like the one the proposed by Kainmueller, Lamecker et al. 2009, has been constructed.

The statistical model is then described by a set of parameters defining the shape and a set of parameters characterizing the BMD distribution for the two bones, with a set of parameters characterizing the poses of both bones under the obligations imposed by the articulated model.

### 3D/2D registration of the multi-object model

A three-dimensional reconstruction of both the shape and the BMD distribution is obtained by means of the method proposed by the first aspect of the invention using the multi-object model described above from one or several DXA images.

This is achieved by finding the instance of the shape models and the instance of the density models, along with performing rigid transformations (translation, rotation limited by the articulated model), which maximizes the similarity between the DXA image (V in Figure 4) and the digitally reconstructed radiography (DRR), previously referred to as simulated projection generated from the models.

Similar to the proposal of Cootes et al. [1], for each model, the shape model generates a new shape on which an instance of the density model is deformed using, for example, a TPS transformation.

In a registration process based on intensities, the space parameter, representing the parameters of the shape and density models and a similarity transform, is sought, where the mean absolute error between the true DXA image and the simulated DRR image of the instance of the deformed density model defines the mentioned similarity.

Obviously, other known 3D/2D registration processes can be used for carrying out the three-dimensional reconstruction proposed by the method according to the first aspect of the invention.

A person skilled in the art would be able to introduce changes and modifications in the described embodiments without departing from the scope of the invention as it is defined in the attached claims.

### References

A series of literature references is indicated below, including patents, articles, etc., included in the field of the art to which the present invention belongs, the most relevant of which have been described in the prior art section above.
[1] Babalola, K. OR., T. F. Cootes, et al. (2008). "3D brain segmentation using active appearance models and local regressors." Med Image Comput Comput Assist Interv 11(Pt 1): 401-408.
[2] Boisvert, J., F. Cheriet, et al. (2008). "Articulated spine models for 3-D reconstruction from partial radiographic data." IEEE Trans Biomed Eng 55(11): 2565-2574.
[3] Boisvert, J., F. Cheriet, et al. (2008). "Geometric variability of the scoliotic spine using statistics on articulated shape models." IEEE Trans Med Imaging 27(4): 557-568.
[4] Bookstein, F. L. (1989). "Principal Warps: Thin-Plate Splines and the Decomposition of Deformations." IEEE Trans. Pattern Anal. Mach. Intell. 11(6): 567-585.
[5] Burghardt, A., G. Kazakia, et al. (in press). "Automated simulation of areal bone mineral density assessment in the distal radius from high-resolution peripheral quantitative computed tomography." Osteoporosis International.
[6] Cody, D. D., G. W. Divine, et al. (2000). "Bone density distribution and gender dominate femoral neck fracture risk predictors." Skeletal Radiol 29(3): 151-161.
[7] Cootes, T. F., G. J. Edwards, et al. (2001). Active Appearance Models. IEEE PAM.
[8] Cootes, T. F., C. J. Taylor, et al. (1995). "Active Shape Models - Their Training and Application." Computer Vision and Image Understanding 61(1): 38-59.
[9] The Maghraoui, A. and C. Roux (2008). "DXA scanning in clinical practice." QJM 101(8): 605-617.
[10] Engelke, K., J. E. Adams, et al. (2008). "Clinical use of quantitative computed tomography and peripheral quantitative computed tomography in the management of osteoporosis in adults: the 2007 ISCD Official Positions." J Clin Densitom 11(1): 123-162.
[11] Feilkas, T. and G. Zheng (2007). Shape reconstruction using X-ray images. EP1868157.
[12] Fleute, M. and S. Lavallée (1999). Nonrigid 3-D/2-D Registration of Images Using Statistical Models. Medical Image Computing and Computer-Assisted Intervention - MICCAI'99: 138-147.
[13] Fleute, M., S. Lavallee, et al. (2000). Three-Dimensional Statistic Reconstruction of Surfaces. WO01/22368.
[14] Frangi, A. F., D. Rueckert, et al. (2002). "Automatic construction of multiple-object three-dimensional statistical shape models: application to cardiac modeling." IEEE Trans Med Imaging 21(9): 1151-1166.
[15] Fritscher, K., B. Schuler, et al. (2008). Prediction of Biomechanical Parameters of the Proximal Femur Using Statistical Appearance Models and Support Vector Regression. MICCAI. New York City, USA. part I: 568-575.
[16] Humbert, L., J. A. De Guise, et al. (2009). "3D reconstruction of the spine from biplanar X-rays using parametric models based on transversal and longitudinal inferences." Med Eng Phys.
[17] Kainmueller, D., H. Lamecker, et al. (2009). "An articulated statistical shape model for accurate hip joint segmentation." Conf Proc IEEE Eng Med Biol Soc 1: 6345-6351.
[18] Kolta, S., A. Le Bras, et al. (2005). "Three-dimensional X-ray absorptiometry (3D-XA): a method for reconstruction of human bones using a dual X-ray absorptiometry device." Osteoporos Int 16(8): 969-976.
[19] Lamecker, H., T. H. Wenckebach, et al. (2006). Atlas-based 3D-Shape Reconstruction from X-Ray Images. Pattern Recognition, 2006. ICPR 2006. 18th International Conference on on Pattern Recognition (ICPR'06) Volume 1.
[20] Le Bras, A. K., Sami., D. Mitton, et al. (2003). METHOD AND DEVICE FOR RADIOGRAPHIC IMAGING WO/2004/056270.
[21] Li, W., J. Kornak, et al. (2009). "Identify fracture-critical regions inside the proximal femur using statistical parametric mapping." Bone 44(4): 596-602.
[22] Mitulescu, A., W. Skalli, et al. (2002). "Three-dimensional surface rendering reconstruction of scoliotic vertebrae using a non stereo-corresponding points technique." Eur Spine J 11(4): 344-352.
[23] Skalli, W., L. Humbert, et al. (2008). METHOD FOR RECONSTRUCTION OF A THREE-DIMENSIONAL MODEL OF A BODY STRUCTURE. WO 2008/146069.
[24] Whitmarsh, T., L. Humbert, et al. (2009). Reconstruction de la forma del femur y densidad mineral ósea en 3D para el diagnóstico de osteoporosis a partir de DXA. XIV Congreso SEIOMM 2009. Santander, Spain.
[25] WHO (1994). Assessment of fracture risk and its implication to screening for postmenopausal osteoporosis. World Health Organization Technical Report Series 843.
[26] WHO (2003). Prevention and Management of Osteoporosis. World Health Organization Technical Report Series.
[27] Wilson, K. E. (2008). ESTIMATING RISK OF FUTURE BONE FRACTURE UTILIZING THREE-DIMENSIONAL BONE DENSITY MODEL. EP1952303.
[28] Yao, J. and R. Taylor (2003). Assessing Accuracy Factors in Deformable 2D/3D Medical Image Registration Using a Statistical Pelvis Model. Proceedings of the Ninth IEEE International Conference on Computer Vision - Volume 2, IEEE Computer Society.
[29] Seise M. et al. "Parts-based segmentation with overlapping part models using Markov chain Monte Carlo". Image and Vision Computing. Elsevier, Guildford, GB, vol. 27, no. 5, 2 April 2009, pages 504-513.
[30] Stan Z. Li "Recognizing Multiple Overlapping Objects in Image: An Optimal Formulation", IEEE Transactions of image processing, IEEE Service center. Piscataway, NJ. US, vol. 9, no. 2, 1 February 2000.
[31] Mardia K. V. et al. "Deformable template recognition of multiple occluded objects". IEEE Transactions on pattern analysis and machine intelligence, IEEE Service Center, Los Alamitos, CA, US, vol. 19, no. 9, 1 September 1997, pages 1035-1042.

## Claims

1. A method for obtaining a three-dimensional reconstruction from one or more projective views, comprising carrying out a 3D/2D registration process for adjusting at least one three-dimensional statistical model comprising statistical information of the shape and appearance of an object, where said information about appearance relates to information about the internal structure of the object, in order to maximize the similarity between at least one simulated projection generated from said at least one three-dimensional statistical model and at least one true projective view, said method being **characterized in that** it comprises:
- obtaining a three-dimensional reconstruction of the shape and appearance of at least two objects which overlap at least partially in said projective views, for the portions of said at least two objects overlapping in said projective views, by carrying out said 3D/2D registration process for at least one three-dimensional multi-object statistical model comprising statistical information about shape and appearance, for said at least two objects, and information about relative spatial relationships between different poses of said objects;
- constructing said at least one three-dimensional multi-object statistical model by grouping said statistical information about shape and appearance in at least two statistical single object models, one for the shape and one for the appearance, for each object, and including them in the at least one three-dimensional multi-object statistical model; and
- including in the constructed three-dimensional multi-object statistical model relationships between the single object shape model of a first of said objects and the single object shape model of a second of said objects and between the single object appearance model of said first object and the single object appearance model of said second object.

2. The method according to claim 1, **characterised in that** said at least two objects are anatomical structures or portions of at least one anatomical structure.

3. The method according to claim 1 or 2, **characterised in that** it is applied to at least two objects articulated to each other.

4. The method according to claim 1, **characterised in that** the construction of said at least one three-dimensional multi-object statistical model further comprises grouping information about the poses:
- of each of said at least two objects in at least two respective statistical single object pose models, including said single object models in said at least one three-dimensional multi-object statistical model, and obtaining said information about relative spatial relationships from the poses included in said at least two statistical single object pose models; or
- of said at least two objects in one statistical single object pose model, including said statistical single object pose model in said at least one three-dimensional multi-object statistical model, and obtaining said information about relative spatial relationships from the information included in said statistical single object pose model.

5. The method according to claim 3 or 4, **characterised in that** it comprises using at least one statistical articulated model for providing said information about relative spatial relationships.

6. The method according to claim 1, **characterised in that** said relationships between single object models are of a generic and/or statistical nature.

7. The method according to claim 1, **characterised in that** said information about relative spatial relationships is of a generic and/or statistical nature.

8. The method according to any one of claims 1 to 7, **characterised in that** said at least two objects are selected from the group including the following objects: bones, soft tissues and organs.

9. The use of a three-dimensional reconstruction, relating to the shape and appearance of at least two objects, and obtained according to the method as per any one of the preceding claims, for identifying bone pathologies and/or performing an estimation of the risk of bone fracture for said patient when the three-dimensional multi-object statistical model includes statistical anatomical structure information from patients with pathologies and said three-dimensional reconstruction is carried out relating to the shape of at least one bone and of its appearance, or internal distribution, of a patient.

10. The use of a three-dimensional reconstruction, relating to the shape and appearance of at least two objects, and obtained according to the method as per any one of the preceding claims, for constructing a model for simulating a potential fracture situation of at least one of said at least two objects, and providing a estimation of the risk of fracture thereof.

11. The use according to claim 10, **characterised in that** when said at least two objects are at least part of a femur, of a pelvis, of a hip joint, and of the hip surrounding soft tissue, of a patient, said simulations comprise simulating a fall of said patient and the use also comprises using said simulations for providing an estimation of risk of hip fracture.

## Patentansprüche

1. Verfahren zur Erstellung einer dreidimensionalen Rekonstruktion aus einer oder mehreren Projektionsansichten, umfassend das Durchführen eines 3D/2D-Registrierungsprozesses zur Einstellung mindestens eines dreidimensionalen statistischen Modells, welches statistische Information der Form und des Aussehens eines Objekts umfasst, wobei die genannte Information über das Aussehen Information über die innere Struktur des Objekts betrifft, um die Ähnlichkeit zwischen mindestens einer simulierten Projektion, welche aus dem genannten mindestens einen dreidimensionalen statistischen Modell erzeugt wird, und mindestens einer wirklichen Projektionsansicht zu maximieren, wobei das genannte Verfahren **dadurch gekennzeichnet ist, dass** es Folgendes umfasst:
- das Erhalten einer dreidimensionalen Rekonstruktion der Form und des Aussehens von mindestens zwei Objekten, welche sich mindestens teilweise in den genannten Projektionsansichten überlappen, für die Teile der genannten mindestens zwei Objekte, welche sich in den genannten Projektionsansichten überlappen, mittels des Durchführens des genannten 3D/2D-Registrierungsprozesses für mindestens ein dreidimensionales statistisches Multiobjekt-Modell, welches statistische Information über die Form und das Aussehen umfasst, für die genannten mindestens zwei Objekte, und Information über relative räumliche Beziehungen zwischen unterschiedlichen Stellungen der genannten Objekte;
- das Erstellen des genannten mindestens einen dreidimensionalen statistischen Multiobjekt-Modell mittels des Gruppierens der genannten statistischen Information über die Form und das Aussehen in mindestens zwei statistischen Einzelobjekt-Modellen, eins für die Form und das andere für das Aussehen, für jedes Objekt, und das Einbeziehen derselben in das mindestens eine dreidimensionale statistische Multiobjekt-Modell; und
- das Einbeziehen im erstellten dreidimensionalen statistischen Multiobjekt-Modell von Beziehungen zwischen dem Einzelobjekt-Formmodell eines ersten der genannten Objekte und dem Einzelobjekt-Formmodell eines zweiten der genannten Objekte und zwischen dem Einzelobjekt-Aussehensmodell des genannten ersten Objektes und das Einzelobjekt-Aussehensmodell des genannten zweiten Objektes.

2. Verfahren nach Anspruch 1, **dadurch gekennzeichnet, dass** die genannten mindestens zwei Objekte anatomische Strukturen oder Teile von mindestens einer anatomischen Struktur sind.

3. Verfahren nach Anspruch 1 oder 2, **dadurch gekennzeichnet, dass** es auf mindestens zwei, miteinander angelenkte Objekte angewendet wird.

4. Verfahren nach Anspruch 1, **dadurch gekennzeichnet, dass** die Erstellung des genannten mindestens einen dreidimensionalen statistischen Multiobjekt-Modell zusätzlich das Gruppieren der Information über die Stellungen:
- von jedem der genannten mindestens zwei Objekte in mindestens zwei jeweiligen statistischen Einzelobjekt-Stellungsmodellen, unter Einbeziehung der genannten Einzelobjekt-Modelle im genannten mindestens einen dreidimensionalen statistischen Multiobjekt-Modell, und unter Erhaltung der genannten Information über die relativen räumlichen Beziehungen aus den Stellungen, welche in den genannten mindestens zwei statistischen Einzelobjekt-Stellungsmodellen einbezogen sind; oder
- der genannten mindestens zwei Objekte in einem statistischen Einzelobjekt-Stellungsmodell, unter Einbeziehung des genannten statistischen Einzelobjekt-Stellungsmodells im genannten mindestens einen dreidimensionalen statistischen Multiobjekt-Modell, und unter Erhaltung der genannten Information über relative räumliche Beziehungen aus der im genannten statistischen Einzelobjekt-Stellungsmodell einbezogenen Information;
umfasst.

5. Verfahren nach Anspruch 3 oder 4, **dadurch gekennzeichnet, dass** es die Verwendung mindestens eines statistischen gelenkigen Modells zum Bereitstellen der genannten Information über relative räumliche Beziehungen umfasst.

6. Verfahren nach Anspruch 1, **dadurch gekennzeichnet, dass** die genannten Beziehungen zwischen Einzelobjekt-Modellen generischer und/oder statistischer Natur sind.

7. Verfahren nach Anspruch 1, **dadurch gekennzeichnet, dass** die genannte Information über relative räumliche Beziehungen generischer und/oder statistischer Natur ist.

8. Verfahren nach einem der Ansprüche 1 bis 7, **dadurch gekennzeichnet, dass** die genannten mindestens zwei Objekte aus der Gruppe ausgewählt werden, welche die folgenden Objekte beinhaltet: Knochen, Weichgewebe und Organe.

9. Verwendung einer dreidimensionalen Rekonstruktion, bezüglich der Form und des Aussehens von mindestens zwei Objekten, und erhalten gemäß dem Verfahren nach einem der vorhergehenden Ansprüche, zum Identifizieren von Knochenkrankheiten und/oder Durchführen einer Einschätzung des Risikos eines Knochenbruchs für den genannten Patienten, wenn das dreidimensionale statistische Multiobjekt-Modell Information der statistischen anatomischen Struktur von Patienten mit Krankheiten einbezieht und die genannte dreidimensionale Rekonstruktion bezüglich der Form mindestens eines Knochens und dessen Aussehen, oder der inneren Verteilung, eines Patienten durchgeführt wird.

10. Verwendung einer dreidimensionalen Rekonstruktion, bezüglich der Form und des Aussehens von mindestens zwei Objekten, und erhalten gemäß dem Verfahren nach einem der vorhergehenden Ansprüche, zum Erstellen eines Modells zum Simulieren einer möglichen Bruchsituation mindestens eines der genannten mindestens zwei Objekte, und das Bereitstellen einer Einschätzung des Bruchrisikos derselben.

11. Verwendung nach Anspruch 10, **dadurch gekennzeichnet, dass**, wenn die genannten mindestens zwei Objekte mindestens Bestandteil eines Oberschenkelknochens, eines Beckens, eines Hüftgelenks und des Weichgewebes, welches die Hüfte umgibt, eines Patienten sind, die genannten Simulationen einen Sturz des genannten Patienten umfassen und die Verwendung auch die Verwendung der genannten Simulationen zum Bereitstellen einer Einschätzung des Risikos einer Hüftfraktur umfasst.

## Revendications

1. Une méthode pour obtenir une reconstruction tridimensionnelle à partir d'une ou de plusieurs visons projectives, comportant la réalisation d'un processus d'enregistrement 3D/2D pour ajuster au moins un modèle statistique tridimensionnel comportant des informations statistiques sur la forme et l'aspect d'un objet, dans laquelle ces informations concernant l'aspect sont reliées aux informations concernant la structure interne de l'objet afin de maximiser la similarité entre au moins une projection simulée générée à partir de cet au moins modèle statistique tridimensionnel et au moins une vision projective vraie, cette méthode étant **caractérisée en ce qu'**elle comporte :
- obtenir une reconstruction tridimensionnelle de la forme et l'aspect d'au moins deux objets qui chevauchent au moins en partie ces visions projectives, pour les portions de ces au moins deux objets chevauchant ces visions projectives, en effectuant ce processus d'enregistrement 3D/2D pour au moins un modèle statistique multi-objet tridimensionnel comportant des informations statistiques concernant la forme et l'aspect , pour ces au moins deux objets, et des informations concernant les relations spatiales relatives entre différentes poses de ces objets ;
- construire cet au moins un modèle statistique multi-objet tridimensionnel en groupant ces informations statistiques concernant la forme et l'aspect dans ou moins deux seuls modèles d'objets statistiques, un pour la forme et un pour l'aspect, pour chaque objet et les inclure dans au moins un modèle statistique multi-objet tridimensionnel ; et
- inclure dans le modèle statistique multi-objet tridimensionnel construit des relations entre le seul modèle de forme d'objet d'un premier de ces objets et le seul modèle de forme d'un deuxième de ces objets et entre le seul modèle d'aspect d'objet de ce premier objet et le seul modèle d'aspect d'objet de ce deuxième objet.

2. La méthode conformément à la revendication 1, **caractérisée en ce que** ces au moins deux objets sont des structures anatomiques ou des portions d'au moins une structure anatomique.

3. La méthode conformément à la revendication 1 ou 2 **caractérisée en ce qu'**elle est appliquée à au moins deux objets articulés entre eux.

4. La méthode conformément à la revendication 1 **caractérisée en ce que** la construction de cet au moins un modèle statistique multi-objet tridimensionnel comporte en plus grouper des informations concernant les poses :
- de chacun de ces au moins deux objets dans au moins deux modèles de pose d'un seul objet statistique respectif, comprenant ces modèles d'un seul objet dans cet au moins un modèle statistique tridimensionnel, et en obtenant ces informations concernant les relations spatiales relatives des poses inclues dans ces au moins deux modèles de pose d'un seul objet statistique ; ou
- de ces au moins deux objets dans un modèle de pose d'un seul objet statistique comprenant ce modèle de pose d'un seul objet statistique dans cet au moins modèle statistique multi-objet tridimensionnel et en obtenant ces informations concernant les relations spatiales relatives à partir des informations comprises dans ce modèle de pose d'un seul objet statistique.

5. La méthode conformément à la revendication 3 ou 4, **caractérisée en ce qu'**elle comporte utiliser au moins un modèle articulé statistique pour fournir ces informations concernant les relations spatiales relatives.

6. La méthode conformément à la revendication 1, **caractérisée en ce que** ces relations entre modèles d'un seul objet sont de nature générique et/ou statistique.

7. La méthode conformément à la revendication 1, **caractérisée en ce que** ces informations concernant les relations spatiales relatives sont de nature générique et/ou statistique.

8. La méthode conformément à la revendication 1 ou 7, **caractérisée en ce que** ces au moins deux objets sont sélectionnés du groupe comprenant les objets suivants :
des os, des tissus et des organes mous.

9. L'utilisation d'une reconstruction tridimensionnelle, concernant la forme et l'aspect d'au moins deux objets, et obtenue conformément à la méthode selon une quelconque des revendications précédentes pour identifier des pathologies des os et/ou pour effectuer une estimation du risque de fracture des os pour ce patient lorsque le modèle statistique multi-objet tridimensionnel comprend des informations de structure anatomique statistique provenant de patients ayant des pathologies et cette reconstruction tridimensionnelle est faite concernant la forme d'au moins un os et son aspect, ou la distribution interne, d'un patient.

10. L'utilisation d'une reconstruction tridimensionnelle, concernant la forme et l'aspect d'au moins deux objets, et obtenue conformément à la méthode selon une quelconque des revendications précédentes pour construire un modèle pour simuler un état de fracture potentielle d'au moins un de ces au moins deux objets et offrant une estimation de son risque de fracture.

11. L'utilisation conformément à la revendication 10, **caractérisé en ce que** lorsque ces au moins deux objets sont au moins une partie d'un fémur, d'un bassin, d'une articulation de la hanche, et du tissu mou entourant la hanche, d'un patient, ces simulations comportent la simulation d'une chute de ce patient et l'utilisation comporte également l'utilisation de ces simulations pour fournir une estimation du risque de fracture de la hanche.
